(19) Europäisches Patentamt
European Patent Office
Office européen des brevets

(11) Veröffentlichungsnummer: **0 492 200 A1**

# (12) EUROPÄISCHE PATENTANMELDUNG

(21) Anmeldenummer: **91120865.0**

(51) Int. Cl.5: **C09B 57/00**, G11B 7/24

(22) Anmeldetag: **05.12.91**

(30) Priorität: **20.12.90 DE 4040906**

(43) Veröffentlichungstag der Anmeldung: **01.07.92 Patentblatt 92/27**

(84) Benannte Vertragsstaaten: **CH DE FR GB IT LI**

(71) Anmelder: **BASF Aktiengesellschaft**
**Carl-Bosch-Strasse 38**
**W-6700 Ludwigshafen(DE)**

(72) Erfinder: **Schmitt, Michael, Dr.**
**Freudenbergstrasse 18**
**W-6940 Weinheim(DE)**
Erfinder: **Albert, Bernhard, Dr.**
**Rietburgstrasse 13**
**W-6701 Maxdorf(DE)**
Erfinder: **Brosius, Sibylle, Dr.**
**Cordovastrasse 29**
**W-6700 Ludwigshafen(DE)**
Erfinder: **Schomann, Klaus Dieter, Dr.**
**Kopernikusstrasse 47**
**W-6700 Ludwigshafen(DE)**
Erfinder: **Kuppelmaier, Harald, Dr.**
**In den Bannzaeunen 17**
**W-6701 Goennheim(DE)**

(54) **Unsymmetrische Azulenquadratsäurefarbstoffe sowie optisches Aufzeichnungsmedium.**

(57) Unsymmetrische Azulenquadratsäurefarbstoffe der Formel

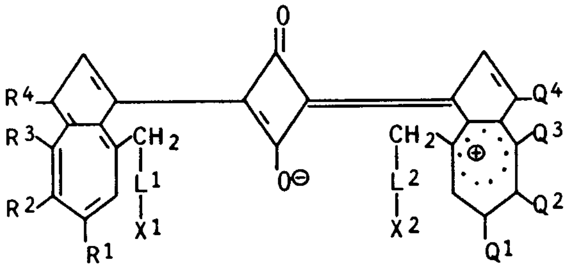

,

in der

| | |
|---|---|
| $X^1$ und $X^2$ | unabhängig voneinander Wasserstoff, Cyano oder einen Rest der Formel $CO-OR^5$, $CO-NR^5R^6$, $OR^5$, $O-CO-OR^5$, $NH-CO-R^5$, $NH-CO-OR^5$ oder $NH-SO_2-R^5$, worin $R^5$ und $R^6$ unabhängig voneinander für Wasserstoff, $C_1$-$C_{12}$-Alkyl, $C_2$-$C_{12}$-Alkenyl, $C_5$-$C_7$-Cycloalkyl oder gegebenenfalls substituiertes Phenyl stehen, |
| $L^1$ und $L^2$ | unabhängig voneinander eine chemische Bindung oder gegebenenfalls substituiertes $C_1$-$C_{12}$-Alkylen, und |
| $R^1$, $R^2$, $R^3$, $R^4$, $Q^1$, $Q^2$, $Q^3$ und $Q^4$ | unabhängig voneinander Wasserstoff oder gegebenenfalls substituiertes $C_1$-$C_{12}$-Alkyl bedeuten, |

mit der Maßgabe, daß beide Azulenringe ein voneinander verschiedenes Substitutionsmuster aufweisen, sowie ein optisches Aufzeichnungsmedium, enthaltend die neuen Farbstoffe.

EP 0 492 200 A1

Die vorliegende Erfindung betrifft neue unsymmetrische Azulenquadratsäurefarbstoffe der Formel I

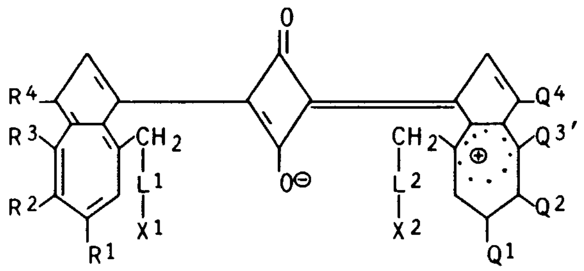

(I),

in der

| | |
|---|---|
| $X^1$ und $X^2$ | unabhängig voneinander jeweils Wasserstoff, Cyano oder einen Rest der Formel CO-OR$^5$, CO-NR$^5$R$^6$, OR$^5$, O-CO-OR$^5$, NH-CO-R$^5$, NH-CO-OR$^5$ oder NH-SO$_2$-R$^5$, worin $R^5$ und $R^6$ unabhängig voneinander jeweils für Wasserstoff, $C_1$-$C_{12}$-Alkyl, $C_2$-$C_{12}$-Alkenyl, $C_5$-$C_7$-Cycloalkyl oder gegebenenfalls substituiertes Phenyl stehen, |
| $L^1$ und $L^2$ | unabhängig voneinander jeweils eine chemische Bindung oder $C_1$-$C_{12}$-Alkylen, das gegebenenfalls durch Phenyl substituiert ist, und |
| $R^1$, $R^2$, $R^3$, $R^4$, $Q^1$, $Q^2$, $Q^3$ und $Q^4$ | unabhängig voneinander jeweils Wasserstoff oder $C_1$-$C_{12}$-Alkyl, das durch Halogen, $C_1$-$C_{12}$-Alkoxy, gegebenenfalls substituiertes Phenyl, $C_1$-$C_{12}$-Alkoxycarbonyl oder Cyano substituiert sein kann, |

bedeuten, mit der Maßgabe, daß

a) beide Azulenringe ein voneinander verschiedenes Substitutionsmuster aufweisen, und

b) wenn $R^4$ und/oder $Q^4$ Wasserstoff bedeuten, an den Azulenringen die Ringpositionen der Substituenten $CH_2$-$L^1$-$X^1$ und $R^3$ und/oder $CH_2$-$L^2$-$X^2$ und $Q^3$ auch gegeneinander vertauscht sein können,

sowie ein optisches Aufzeichnungsmedium, enthaltend diese Farbstoffe. Zur kostengünstigen Herstellung optischer Datenaufzeichnungsträger werden Farbstoffe mit besonderen Eigenschaften benötigt. Diese Farbstoffe sollten

- eine starke Absorption zwischen 700 und 900 nm aufweisen, um mit Halbleiterlasern beschreibbare Schichten zu liefern,
- in Schicht eine hohe Reflektivität im nahen Infrarot (700 bis 900 nm) aufweisen, um mit einem einfachen Schichtaufbau (ohne Reflektorschicht) auszukommen,
- eine hohe Löslichkeit aufweisen, um beispielsweise die dünne Speicherschicht durch Spincoating auf einen Träger aufbringen zu können und
- in dünnen Schichten eine hohe Stabilität aufweisen.

Aus der EP-A-310 080 und EP-A-341 541 sowie den älteren Patentanmeldungen EP-A-424 777 und EP-A-427 007 sind bereits Azulenquadratsäurefarbstoffe bekannt.

Viele der bisher bekannten Speichermaterialien weisen jedoch häufig zumindest in einem der genannten Anforderungspunkte Mängel auf.

Aufgabe der vorliegenden Erfindung war es daher, neue Farbstoffe bereitzustellen, bei denen die obengenannten Mängel nicht mehr oder höchstens nur in äußerst geringem Maße auftreten.

Demgemäß wurden die oben näher bezeichneten unsymmetrischen Azulenquadratsäurefarbstoffe der Formel I gefunden.

Alle in der obengenannten Formel I auftretenden Alkyl-, Alkylen- und Alkenylgruppen können sowohl geradkettig als auch verzweigt sein.

Wenn in Formel I substituierte Phenylgruppen auftreten, können als Substituenten z. B. $C_1$-$C_4$-Alkyl, $C_1$-$C_4$-Alkoxy oder Halogen, in Betracht kommen.

Als Halogen ist jeweils Fluor, Chlor oder Brom bevorzugt.

Reste $L^1$ und $L^2$ sind z. B. Methylen, Ethylen, 1,2- oder 1,3-Propylen, 1,2-, 1,3-, 2,3- oder 1,4-Butylen, Pentamethylen, Hexamethylen, Heptamethylen, Octamethylen, Nonamethylen, Decamethylen, Undecamethylen, Dodecamethylen, Phenylethylen oder 1-Phenyl-1,3-propylen.

Reste $R^1$, $R^2$, $R^3$, $R^4$, $R^5$, $R^6$, $Q^1$, $Q^2$, $Q^3$ und $Q^4$ in Formel I sind beispielsweise Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Nonyl, Decyl, Undecyl oder Dodecyl. Reste $R^5$ und $R^6$ sind weiterhin z.B. Vinyl, Allyl, Methallyl, Ethallyl, Cyclopentyl, Cyclohexyl, Cycloheptyl, 2- oder 4-Methylphenyl, 2- oder 4-Methoxyphenyl oder 2- oder 4-Chlorphenyl.

Reste $R^1$, $R^2$, $R^3$, $R^4$, $Q^1$, $Q^2$, $Q^3$ und $Q^4$ sind weiterhin Z. B. Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl, Cyanomethyl, 2-Cyanoethyl, 3-Cyanopropyl, 2-Cyanobutyl, 4-Cyanobutyl, 5-Cyanopentyl, 6-Cyanohexyl, 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Ethoxypropyl, 4-Ethoxybutyl, 4-Isopropoxybutyl, 5-Ethoxypentyl, 6-Methoxyhexyl, Benzyl, 1-Phenylethyl, 2-Phenylethyl, 4-Chlorbenzyl, 4-Methoxybenzyl, 2-(4-Methylphenyl)-ethyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl oder 6-Ethoxycarbonylhexyl.

Bevorzugt sind unsymmetrische Azulenquadratsäurefarbstoffe der Formel I, in der $R^1$, $R^2$, $R^3$, $R^4$, $Q^1$, $Q^2$, $Q^3$ und $Q^4$ jeweils Wasserstoff oder $C_1$-$C_6$-Alkyl bedeuten.

Besonders bevorzugt sind unsymmetrische Azulenquadratsäurefarbstoffe der Formel I, in der $R^1$, $R^3$, $Q^1$ und $Q^3$ jeweils Wasserstoff, $R^2$ und $Q^2$ jeweils Isopropyl und $R^4$ und $Q^4$ jeweils Methyl bedeuten. Diese Farbstoffe entsprechen der Formel Ia

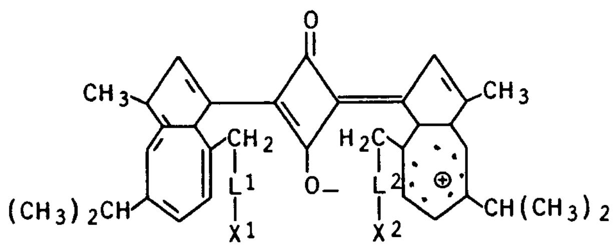

(Ia),

in der $L^1$, $X^1$, $L^2$ und $X^2$ jeweils die obengenannte Bedeutung besitzen.

Besonders hervorzuheben sind unsymmetrische Azulenquadratsäurefarbstoffe der Formel I, in der die Gruppe der Substituenten $R^1$, $R^2$, $R^3$ und $R^4$ identisch ist mit der Gruppe der Substituenten $Q^1$, $Q^2$, $Q^3$ und $Q^4$ und $L^1$-$X^1$ und $L^2$-$X^2$ voneinander verschieden sind.

Von besonderer Bedeutung sind unsymmetrische Azulenquadratsäurefarbstoffe der Formel I, in der $L^1$-$X^1$ und $L^2$-$X^2$ voneinander verschieden sind und $L^2$ eine chemische Bindung und $X^2$ Wasserstoff bedeutet.

Die Farbstoffe der Formel I können aus Azulenderivaten der Formel IIa, in der $X^1$, $L^1$, $R^1$, $R^2$, $R^3$ und $R^4$ jeweils die obengenannte Bedeutung besitzen, durch Umsetzung mit Quadratsäurederivaten der Formel III, in der $X^2$, $L^2$, $Q^1$, $Q^2$, $Q^3$ und $Q^4$ jeweils die obengenannte Bedeutung besitzen, gemäß der folgenden Gleichung erhalten werden:

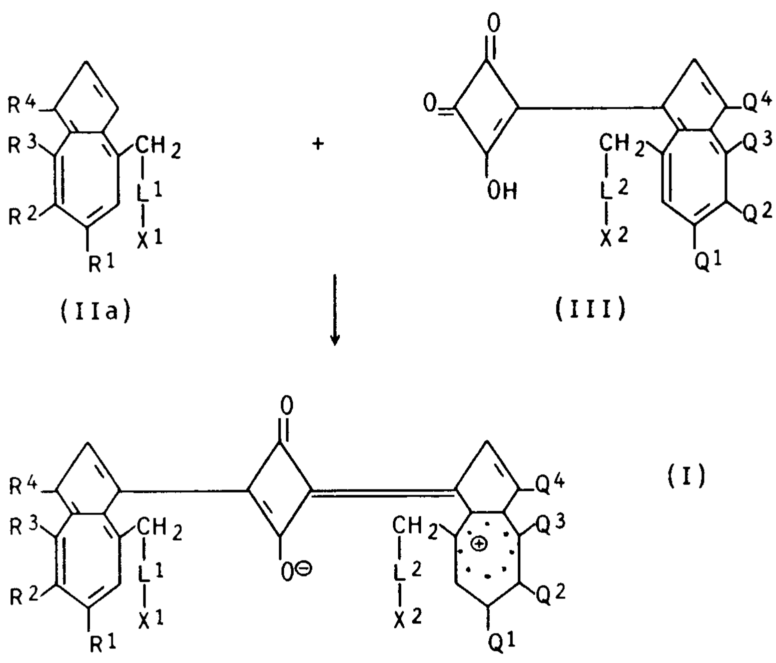

(IIa) (III)

(I)

Quadratsäurederivate der Formel III werden gemäß der folgenden Gleichung durch Reaktion der Azulenderivate IIb mit Quadratsdäuredichlorid erhalten, wobei $X^2$, $L^2$, $Q^1$, $Q^2$, $Q^3$ und $Q^4$ jeweils die obengenannte Bedeutung besitzen:

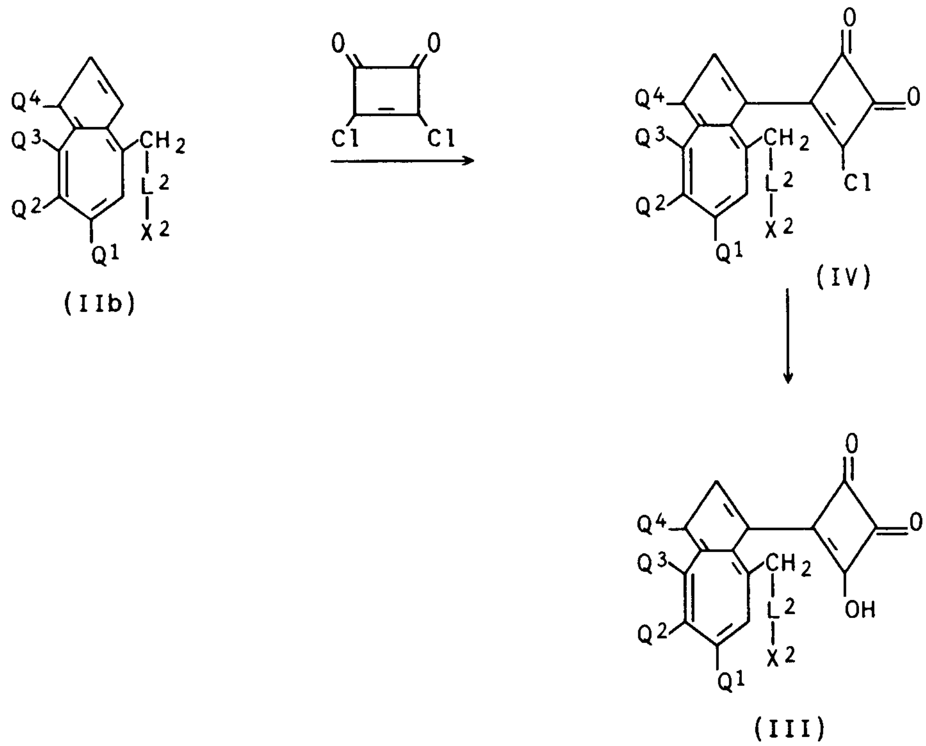

(IIb) (IV) (III)

Bei denjenigen Azulenderivaten der Formel IIa und IIb, in denen $R^4$ und $Q^4$ Wasserstoff bedeuten, kann die Verknüpfung zur Quadratsäure an unterschiedlichen Ringpositionen des Fünfrings erfolgen, wobei isomere Produkte entstehen können, in denen die Ringpositionen der Substituenten $CH_2$-$L^1$-$X^1$ und $R^3$ sowie $CH_2$-$L^2$-$X^2$ und $Q^3$, wie oben ausgeführt, gegeneinander vertauscht sind. Es sind nämlich dann Verbindungen, bei denen die Bindung zur Quadratsäure an derjenigen Seite erfolgt, an der der Substituent $CH_2$-$L^1$-$X^1$ oder $CH_2$-$L^2$-$X^2$ gebunden ist, von solchen zu unterscheiden, bei denen die Bindung zur Quadratsäure an derjenigen Seite erfolgt, an der der Substituent $R^3$ oder $Q^3$ gebunden ist. Die isomeren Verbindungen können chromatographisch getrennt werden. Für die Anwendungen in Speicherschichten werden jedoch üblicherweise die Isomerengemische eingesetzt.

Die Herstellung der Azulenderivate II erfolgt nach an sich bekannten Methoden, wie sie beispielsweise in der EP-A-310 080, in den älteren Patentanmeldungen EP-A-424 777 oder EP-A-427 077 oder in der älteren deutschen Patentanmeldung P 40 39 437.9 beschrieben sind.

Eine weitere Aufgabe der vorliegenden Erfindung war es, ein neues optisches Aufzeichnungsmedium mit Azulenquadratsäurefarbstoffen als Speichermaterialien bereitzustellen, das in einfacher Weise hergestellt werden kann, das gut beschreibbar und anschließend auch gut lesbar ist, das eine hohe Stabilität der Speicherschichten aufweist und wobei das Signal:Rausch-Verhältnis möglichst hoch sein sollte.

Die Erfindung betrifft nun weiterhin ein optisches Aufzeichnungsmedium, enthaltend einen Träger sowie einen strahlungsempfindlichen, Farbstoff und gegebenenfalls Bindemittel enthaltenden dünnen Beschichtungsfilm, wobei der Farbstoff die Formel I

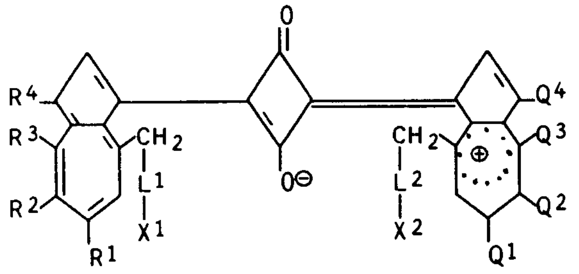

(I)

aufweist, in der

| | |
|---|---|
| $X^1$ und $X^2$ | unabhängig voneinander jeweils Wasserstoff, Cyano oder einen Rest der Formel $CO\text{-}OR^5$, $CO\text{-}NR^5R^6$, $OR^5$, $O\text{-}CO\text{-}OR^5$, $NH\text{-}CO\text{-}R^5$, $NH\text{-}CO\text{-}OR^5$ oder $NH\text{-}SO_2\text{-}R^5$, worin $R^5$ und $R^6$ unabhängig voneinander jeweils für Wasserstoff, $C_1$-$C_{12}$-Alkyl, $C_2$-$C_{12}$-Alkenyl, $C_5$-$C_7$-Cycloalkyl oder gegebenenfalls substituiertes Phenyl stehen, |
| $L^1$ und $L^2$ | unabhängig voneinander jeweils eine chemische Bindung oder $C_1$-$C_{12}$-Alkylen, das gegebenenfalls durch Phenyl substituiert ist, und |
| $R^1$, $R^2$, $R^3$, $R^4$, $Q^1$, $Q^2$, $Q^3$ und $Q^4$ | unabhängig voneinander jeweils Wasserstoff oder $C_1$-$C_{12}$-Alkyl, das durch Halogen, $C_1$-$C_{12}$-Alkoxy, gegebenenfalls substituiertes Phenyl, $C_1$-$C_{12}$-Alkoxycarbonyl oder Cyano substituiert sein kann, |

bedeuten, mit der Maßgabe, daß

a) beide Azulenringe ein voneinander verschiedenes Substitutionsmuster aufweisen, und

b) wenn $R^4$ und/oder $Q^4$ Wasserstoff bedeuten, an den Azulenringen die Ringpositionen der Substituenten $CH_2\text{-}L^1\text{-}X^1$ und $R^3$ und/oder $CH_2\text{-}L^2\text{-}X^2$ und $Q^3$ auch gegeneinander vertauscht sein können.

Bevorzugt ist ein optische Aufzeichnungsmedium, das Azulenquadratsäurefarbstoffe der Formel I enthält, in der $R^1$, $R^2$, $R^3$, $R^4$, $Q^1$, $Q^2$, $Q^3$ und $Q^4$ jeweils Wasserstoff oder $C_1$-$C_6$-Alkyl bedeuten.

Besonders bevorzugt ist ein optisches Aufzeichnungsmedium, das Azulenquadratsäurefarbstoffe der Formel I enthält, in der $R^1$, $R^3$, $Q^1$ und $Q^3$ jeweils Wasserstoff, $R^2$ und $Q^2$ jeweils Isopropyl und $R^4$ und $Q^4$ jeweils Methyl bedeuten.

Als Träger kommen zweckmäßig transparente Träger, wie Glas oder Kunststoffe in Betracht. Geeignete Kunststoffe sind beispielsweise Poly(meth)acrylate, Polycarbonate, Polyester, Epoxide, Polyolefine, z.B. Polymethylpenten, Polyamid, Polyvinylchlorid, Polystyrol oder Polyvinylester.

Ein bevorzugtes Aufzeichnungsmedium weist einen Träger aus Polycarbonat oder Poly(meth)acrylaten, insbesondere aber Polycarbonat auf.

Weiterhin bevorzugt ist ein optisches Aufzeichnungsmedium, das 1 bis 30 Gew.-% bezogen auf Farbstoff, an Bindemittel enthält.

Die neuen Azulenquadratsäurefarbstoffe der Formel I zeigen gute optische Daten. Darüberhinaus sind bei den neuen Verbindungen die reinen Farbstoffschichten sehr stabil. Bislang wurde nämlich keine Rekristallisation der reinen Farbstoffschicht beobachtet und somit kann auf den Zusatz polymerer Bindemittel verzichtet werden. Außerdem ist auch die Lichtechtheit (Stabilität) deutlich größer als bei bekannten Methinfarbstoffen, so daß der Zusatz von Stabilisatoren zur Schichtrezeptur auf ein Minimum begrenzt werden kann. Von besonderem Vorteil ist auch die gute Löslichkeit der neuen Farbstoffe I in den meisten organischen Lösungsmitteln, so daß diese Farbstoffe direkt (ohne Schutzschicht) auf strukturierte Kunststoffsubstrate, insbesondere Polycarbonatsubstrate, aufgeschleudert werden können.

Wie oben ausgeführt, enthält die aufzuschleudernde Lösung vorzugsweise ein Bindemittel, um eine gute Langzeitstabilität des Aufzeichnungsmediums zu gewährleisten und vor allem die optimale Viskosität der aufzuschleudernden Lösung einzustellen. Vorzugsweise enthält die Lösung dabei 1 bis 30 Gew.-%, bezogen auf den Gehalt an gelöstem Feststoff der aufzuschleudernden Lösung, eines Bindemittels. Als Bindemittel kommen z. B. Polyorganosiloxane, Epoxide, Poly(meth)acrylate, Polystyrolhomo- und copolymerisate, Polyvinylcarbazol, Polyvinylpyrrolidon, Polyimidazolcopolymere, Polyvinylestercopolymere, Polyvinylethercopolymere, Polyvinylidenchloridcopolymere, Acrylnitrilcopolymere, Polyvinylchlorid oder dessen Copolymere, Celluloseacetat oder Nitrocellulose in Betracht.

Ein bevorzugtes Aufzeichnungsmedium weist ein Bindemittel auf Basis eines Vinylpyrrolidon-Vinylacetat-Copolymeren oder eines Polyvinylchlorid-Polyvinylether-Copolymeren auf.

Das erfindungsgemäße optische Aufzeichnungsmedium wird zweckmäßig durch Aufschleudern einer Lösung, enthaltend organisches Lösungsmittel, Azulenquadratsäurefarbstoff I und gegebenenfalls Bindemittel, hergestellt.

Zweckmäßig weist die aufzuschleudernde Lösung dabei einen Gehalt an gelöstem Feststoff von 1 bis 30 Gew.-%, bezogen auf die Lösung, auf.

Geeignete Lösungsmittel sind z. B. Propanol, Isopropanol, Butanol, Diacetonalkohol, Methylethylketon, Toluol, Bromoform, 1,1,2-Trichlorethan oder deren Mischungen.

Gegebenenfalls kann die Lösung noch 10 Gew.-%, bezogen auf den Gehalt an gelöstem Feststoff der aufzuschleudernden Lösung, an Additiven, z. B. Antioxidantien, Singulett-Sauerstoff-Quencher oder UV-Absorber, enthalten.

Bevorzugt enthält die aufzuschleudernde Lösung bis zu 5 Gew.-%, bezogen auf den Gehalt an gelöstem Feststoff der aufzuschleudernden Lösung, eine Mischung von mehreren Antioxidantien, Singulett-Sauerstoff-Quenchern und UV-Absorbern. Bei Anwendungen von solchen Antioxidantien, die ebenfalls im

nahen Infrarot absorbieren, beispielsweise Nickelthiolenkomplexe, wie sie z. B. in der DE-A-3 505 750, DE-A-3 505 751 oder in S. H. Kim, M. Matsuoka, M. Yomoto, Y. Tsuchiva und T. Kitao, Dyes and Pigments, Band 8, S. 381 bis 388, 1987, beschrieben sind, können vorzugsweise bis zu 10 Gew.-%, bezogen auf den Gehalt an gelöstem Feststoff der aufzuschleudernden Lösung, in der Lösung enthalten sein.

Unter Aufschleudern ist dabei das Aufbringen der Lösung auf den in Rotation befindlichen Träger, der zweckmäßig eine runde Form aufweist, zu verstehen. Es ist aber auch möglich, die Lösung auf den zunächst ruhenden Träger aufzubringen und ihn anschließend in Rotation zu versetzen. Das Aufgeben auf den Träger erfolgt zweckmäßig mit einer Spritze oder Kapillaren oder mittels einer mechanischen Pumpe.

Die Rotation des Trägers erfolgt im allgemeinen mit einer Geschwindigkeit von 5 bis 7000 U/min, vorzugsweise 500 bis 5000 U/min, wobei das Aufschleudern der Lösung zweckmäßig bei geringerer Drehzahl (ca. 500 bis 2000 U/min) und das daran anschließende Trockenschleudern bei höherer Drehzahl (ca. 5000 bis 7000 U/min) vorgenommen wird.

Die Schichtdicke der gegenüber Laserlicht empfindlichen Schicht beträgt 40 bis 160 nm, vorzugweise 80 bis 120 nm. Sie ist abhängig von der Drehzahl, von der Konzentration und Viskosität der aufzuschleudernden Lösung sowie von der Temperatur.

Beim erfindungsgemäßen optischen Aufzeichnungsmedium liegt die gegenüber Laserlicht empfindliche Schicht in Form einer homogenen, dünnen, glatten

Schicht vor, die eine hohe optische Qualität aufweist. So liegen die Reflektivitätswerte im allgemeinen in einem Bereich der größer als 12 % ist.

Das neue Aufzeichnungsmedium ist ferner bei der Wellenlänge der verwendeten Laserlichtquelle hinreichend empfindlich, d. h. bei Einstrahlung von Lichtpulsen von wenigen nJ Energiegehalt, die auf Brennpunktdurchmesser von $\leqq 1\ \mu m$ fokussiert sind, bilden sich Pits aus, wobei ein ausgezeichnetes Signal:Rausch-Verhalten erzielt wird.

Als Laserlichtquelle eignen sich wegen der geringen Größe des Bauelementes, des geringen Energiebedarfs und der Möglichkeit der direkten Modulation der optischen Ausgangsleistung durch Modulation des elektrischen Antriebsstromes Festkörper-Injektionslaser, die im nahen Infrarot emittieren, vor allem der AlGaAs-Laser, der im Wellenlängenbereich zwischen etwa 750 und 900 nm arbeitet, besonders gut.

Die folgenden Beispiele sollen die Erfindung näher erläutern.

Beispiel 1

Darstellung von 3-Hydroxy-4-(7-ispropyl-1,4-dimethylazulen-3-yl)cyclobut-3-en-1,2-dion

Zu einer Lösung aus 45 g (0,3 mol) Quadratsäuredichlorid in 250 ml Tetrahydrofuran wurden 59,5 g (0,3 mol) Guajazulen in 100 ml Tetrahydrofuran gelöst, bei Raumtemperatur langsam zugetropft. Nach beendeter Reaktion wurde die Lösung eingeengt und der Rückstand in 200 ml warmem Ethylacetat aufgenommen. Petrolether (Sdp. 40 bis 70 °C) wurde bis zur beginnenden Kristallisation zugegeben. Nach Abkühlen wurde der Niederschlag abgesaugt und mit Petrolether gewaschen. Man erhielt 73 g (78 %) 3-Chlor-4-(7-isopropyl-1,4-dimethylazulen-3-yl)cyclobut-3-en-1,2-dion als dunkelbraune Kristalle vom Schmp. 138 bis 139 °C.

Physikalische Daten:

IR (KBr): 3960, 3840 (C-H);, 1790, 1776, 1756 (C=O); 1531, 1508, 1396, 1366, 1229, 1049 $cm^{-1}$.

$^1$H-NMR ($CDCl_3$): $\delta$ = 1.40 (2s, 6H), 2.58 (s, 3H) 2.92 (s, 3H), 3.18 (m, 1H), 7.45 (d, 1H), 7.65 (d, 1H), 8.05 (s, 1H), 8.26 (s, 1H) ppm.

$^{13}$C-NMR ($CDCl_3$): $\delta$ = 12.76, 24.38 (2C), 27.43, 38.27, 112.29, 127.90, 133.52, 134.78, 137.41, 137.65, 140.25, 143.93, 148.34, 149.60, 173.43, 188.28, 190.74, 195.93 ppm.

MS: m/e = 312.5 ($C_{19}H_{17}Cl0_2^{+}$).

62,4 g (0,2 mol) 3-Chlor-4-(7-isopropyl-1,4-dimethylazulen-3-yl)cyclobut-3-en-1,2-dion wurden in 200 ml Dioxan, 40 ml Wasser und 2 ml konz. Salzsäure 8 Stunden unter Rückfluß erhitzt. Das Lösungsmittel wurde unter vermindertem Druck entfernt und der verbleibende ölige Rückstand durch Zugabe von Dichlormethan kristallisiert. Man erhielt 36,5 g (62 %) 3-Hydroxy-4-(7-isopropyl-1,4-dimethylazulen-3-yl)cyclobut-3-en-1,2-dion als dunkelbraune Kristalle vom Schmp. 120 bis 123 °C. Die Substanz wurde ohne weitere Reinigung zur Farbstoffsynthese verwendet.

Analog Beispiel 1 wurden die in der folgenden Tabelle 1 aufgeführten Quadratsäurederivate hergestellt.

Tabelle 1:

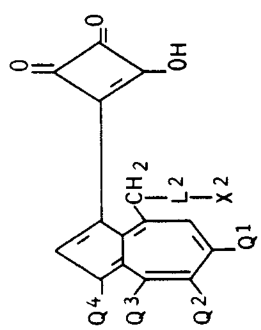

| Bsp. Nr. | $L^2-X^2$ | $Q^1$ | $Q^2$ | $Q^3$ | $Q^4$ | Schmp. (°C) |
|---|---|---|---|---|---|---|
| 2 | 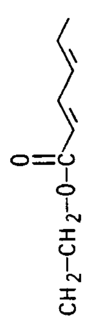 | H | $CH(CH_3)_2$ | H | $CH_3$ | 92 - 95 |
| 3 | 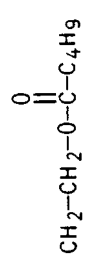 | H | $CH(CH_3)_2$ | H | $CH_3$ | > 240 (Zers.) |
| 4 | 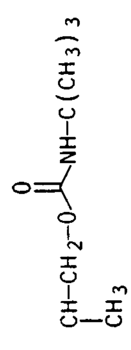 | H | $CH(CH_3)_2$ | H | $CH_3$ | > 240 (Zers.) |
| 5 | H | $CH_3$ | H | $CH_3$ | H | > 300 (Zers.) |

Beispiel 6

Darstellung von (7-Isopropyl-1,4-dimethylazulen)-[3-(7-isopropyl-1-methylazulen-4-yl)butylmethacrylat]-quadratsäurefarbstoff

Eine Mischung aus 6,0 g (0,02 mol) 3-Hydroxy-4-(7-isopropyl-1,4-dimethylazulen-3-yl)cyclobut-3-en-1,2-dion, 6,5 g (0,02 mol) 3-(7-Isopropyl-1-methylazulen-4-yl)butylmethacrylat, 40 ml Toluol und 40 ml n-Butanol wurden am Wasserabscheider 4 Stunden unter Rückfluß erhitzt. Nach Abziehen des Lösungsmittels unter vermindertem Druck wurde der Rückstand an Kieselgel (Ethylacetat/Petrolether 2:8 v/v) chromatographiert und aus Ethylacetat/Petrolether kristallisiert. Man erhielt 5,4 g (46 %) Quadratsäurefarbstoff als metallisch glänzende Plättchen vom Schmp. 173 bis 174 °C.

Physikalische Daten:

IR (KBr): $\nu$ = 3960, 3920, 3870 (C-H); 1715 (C=0); 1608, 1597, 1432, 1385, 1339, 1320, 1249 $cm^{-1}$. - UV ($CH_2Cl_2$): $\lambda_{max.}$ ($\epsilon$) = 766 (117 000) nm. $^1$H-NMR ($CDCl_3$): $\delta$ = 1.39 (mc, 12H), 1.86 (s, 3H), 2.00 (mc, 2H), 2.55 (2s, 6H), 3.08 (mc, 2H), 3.42 (s, 3H), 4.05 (m, 4H), 5.42 (s, 1H), 5.98 (s, 1H), 7.45 (m, 4H), 8.10 (m, 2H), 8.85 (2s, 2H) ppm.

$^{13}$C-NMR ($CDCl_3$): $\delta$ = 12.95 (q, 2C), 18.16 (q), 24.18 (q, 4C), 28.14 (q), 30.54 (t), 36.22 (t), 38.27 (d, 2C), 64.05 (t), 121.51, 122.01, 125.19 (t), 130.62, 133.94, 134.15, 135.67, 136.32, 137.81, 138.11, 139.34, 139.63, 141.53, 142.65, 147.32, 150.02, 150.26, 152.69, 155.38, 167.18, 182.49, 183.14 ppm.

MS: m/e = 588 ($C_{40}H_{42}0_4^+$, 25 %).

Analog Beispiel 6 wurden die in der folgenden Tabelle 2 aufgeführten Quadratsäurefarbstoffe synthetisiert.

Tabelle 2

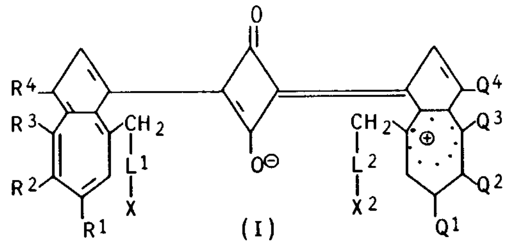

(I)

| Bsp. Nr. | $L^1-X^1$ | $R^1$ | $R^2$ | $R^3$ | $R^4$ | $L^2-X^2$ | $Q^1$ | $Q^2$ | $Q^3$ | $Q^4$ | $\lambda_{max.}$ in $CH_2Cl_2$ ($\varepsilon$) | Schmp. [°C] |
|---|---|---|---|---|---|---|---|---|---|---|---|---|
| 7 | 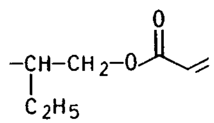 | H | $CH(CH_3)_2$ | H | $CH_3$ | H | H | $CH(CH_3)_2$ | H | $CH_3$ | 764 (111 000) | 102-105 |
| 8 | 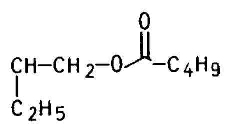 | H | $CH(CH_3)_2$ | H | $CH_3$ | H | H | $CH(CH_3)_2$ | H | $CH_3$ | 771 (121 000) | 118-120 |
| 9 | 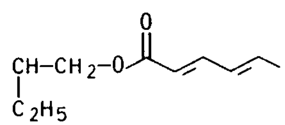 | H | $CH(CH_3)_2$ | H | $CH_3$ | H | H | $CH(CH_3)_2$ | H | $CH_3$ | 772 (111 000) | 108-110 |
| 10 | 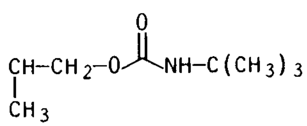 | H | $CH(CH_3)_2$ | H | $CH_3$ | H | H | $CH(CH_3)_2$ | H | $CH_3$ | 772 (115 000) | 179-181 |
| 11 | 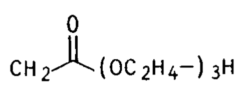 | H | $CH(CH_3)_2$ | H | $CH_3$ | H | H | $CH(CH_3)_2$ | H | $CH_3$ | 766 (128 000) | 111-112 |

Tabelle 2 (Forts.)

| Bsp. Nr. | $L^1$-$X^1$ | $R^1$ | $R^2$ | $R^3$ | $R^4$ | $L^2$-$X^2$ | $Q^1$ | $Q^2$ | $Q^3$ | $Q^4$ | $\lambda_{max}$ ($\varepsilon$) in $CH_2Cl_2$ | Schmp. [°C] |
|---|---|---|---|---|---|---|---|---|---|---|---|---|
| 12 | 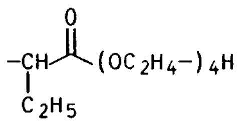 | H | $CH(CH_3)_2$ | H | $CH_3$ | H | H | $CH(CH_3)_2$ | H | $CH_3$ | 765 (114 000) | Öl |
| 13 | 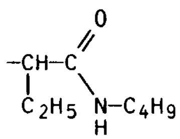 | H | $CH(CH_3)_2$ | H | $CH_3$ | H | H | $CH(CH_3)_2$ | H | $CH_3$ | 772 (112 000) | 204-207 |
| 14 | 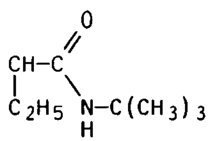 | H | $CH(CH_3)_2$ | H | $CH_3$ | H | H | $CH(CH_3)_2$ | H | $CH_3$ | 772 (115 000) | 179-181 |
| 15 | 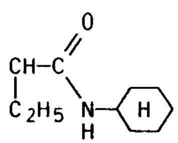 | H | $CH(CH_3)_2$ | H | $CH_3$ | H | H | $CH(CH_3)_2$ | H | $CH_3$ | 766 (123 000) | 199-202 |
| 16 | 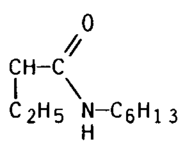 | H | $CH(CH_3)_2$ | H | $CH_3$ | H | H | $CH(CH_3)_2$ | H | $CH_3$ | 772 (112 000) | 119-122 |

Tabelle 2 (Forts.)

| Bsp. Nr. | $L^1-X^1$ | $R^1$ | $R^2$ | $R^3$ | $R^4$ | $L^2-X^2$ | $Q^1$ | $Q^2$ | $Q^3$ | $Q^4$ | $\lambda_{max}$ ($\varepsilon$) in $CH_2Cl_2$ | Schmp. [°C] |
|---|---|---|---|---|---|---|---|---|---|---|---|---|
| 17 | 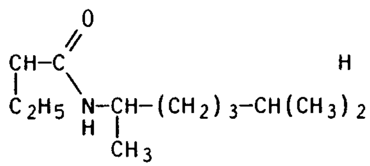 | H | $CH(CH_3)_2$ | H | $CH_3$ | H | H | $CH(CH_3)_2$ | H | $CH_3$ | 766 (134 000) | 187-188 |
| 18 | 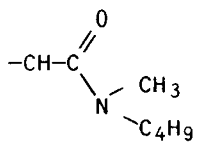 | H | $CH(CH_3)_2$ | H | $CH_3$ | H | H | $CH(CH_3)_2$ | H | $CH_3$ | 766 (119 000) | 180-182 |
| 19 | 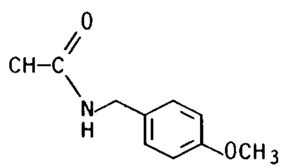 | H | $CH(CH_3)_2$ | H | $CH_3$ | H | H | $CH(CH_3)_2$ | H | $CH_3$ | 766 (124 000) | 192-194 |
| 20 | 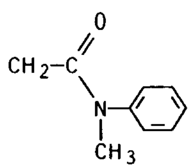 | H | $CH(CH_3)_2$ | H | $CH_3$ | H | H | $CH(CH_3)_2$ | H | $CH_3$ | 766 (111 000) | 185-187 |
| 21 | 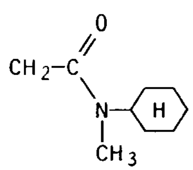 | H | $CH(CH_3)_2$ | H | $CH_3$ | H | H | $CH(CH_3)_2$ | H | $CH_3$ | 765 (62 000) | 164-166 |

Tabelle 2 (Forts.)

| Bsp. Nr. | $L^1$-$X^1$ | $R^1$ | $R^2$ | $R^3$ | $R^4$ | $L^2$-$X^2$ | $Q^1$ | $Q^2$ | $Q^3$ | $Q^4$ | $\lambda_{max}$ ($\varepsilon$) in $CH_2Cl_2$ | Schmp. [°C] |
|---|---|---|---|---|---|---|---|---|---|---|---|---|
| 22 | 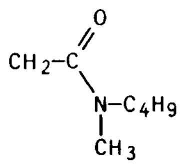 | H | $CH(CH_3)_2$ | H | $CH_3$ | H | H | $CH(CH_3)_2$ | H | $CH_3$ | 765 (127 000) | 141-143 |
| 23 | 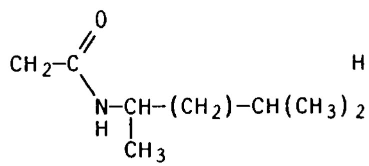 | H | $CH(CH_3)_2$ | H | $CH_3$ | H | H | $CH(CH_3)_2$ | H | $CH_3$ | 768 (138 000) | 151-155 |
| 24 | 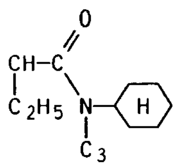 | H | $CH(CH_3)_2$ | H | $CH_3$ | H | H | $CH(CH_3)_2$ | H | $CH_3$ | 765 (62 000) | 136-139 |
| 25 | 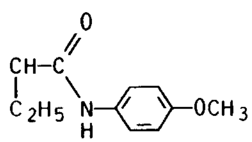 | H | $CH(CH_3)_2$ | H | $CH_3$ | H | H | $CH(CH_3)_2$ | H | $CH_3$ | 766 (124 000) | 192-194 |
| 26 | 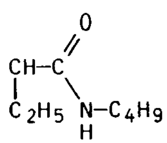 | H | $CH(CH_3)_2$ | H | $CH_3$ | H | H | $CH(CH_3)_2$ | H | $CH_3$ | 772 (112 000) | 202-207 |

Tabelle 2 (Forts.)

| Bsp. Nr. | $L^1-X^1$ | $R^1$ | $R^2$ | $R^3$ | $R^4$ | $L^2-X^2$ | $Q^1$ | $Q^2$ | $Q^3$ | $Q^4$ | $\lambda_{max}$ ($\varepsilon$) in $CH_2Cl_2$ | Schmp. [°C] |
|---|---|---|---|---|---|---|---|---|---|---|---|---|
| 27 | 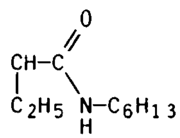 | H | $CH(CH_3)_2$ | H | $CH_3$ | H | H | $CH(CH_3)_2$ | H | $CH_3$ | 772 (112 000) | 199-202 |
| 28 | $(CH_2)_3-NH-CO-(CH_2)_2-CO-OC_4H_9$ | H | $CH(CH_3)_2$ | H | $CH_3$ | H | H | $CH(CH_3)_2$ | H | $CH_3$ | 770 (118 000) | 148-150 |
| 29 | 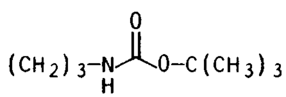 | H | $CH(CH_3)_2$ | H | $CH_3$ | H | H | $CH(CH_3)_2$ | H | $CH_3$ | 768 (120 000) | 134-136 |

Beispiel 30

Eine 5 gew.-%ige Lösung des Farbstoffes 6 in Toluol wurde mit einer Spritze bei 2000 U/min auf eine rotierende Polymethylmethacrylatscheibe aufgetragen und dann das restliche Lösungsmittel bei 5000 U/min

abgeschleudert. Man erhielt eine homogene, hochreflektierende Farbstoffschicht, die sich mit einem Halbleiterlaser (λ = 830 nm) sehr gut beschreiben ließ. Die Informationen können mit gutem Kontrast wieder ausgelesen werden.

Beispiel 31

Eine 3 gew.-%ige Lösung des Farbstoffes 6, die 30 Gew.-%, bezogen auf den Gehalt an gelöstem Feststoff der Lösung, Polymethacrylat enthielt, wurde analog Beispiel 30 auf eine gerillte Polycarbonatscheibe aufgeschleudert. Man erhielt eine homogene, hochreflektierende Farbstoffschicht, die auf dem Substrat gut haftet, die Spurrillen des Substrats gut abbildet und mit einem Halbleiterlaser (λ = 830 nm) sehr gut beschreibbar war. Die eingeschriebene Information war im Klimatest stabil und kann mit gutem Kontrast beliebig oft wieder ausgelesen werden.

Beispiel 32

Eine 2 gew.%ige Lösung des Farbstoffs 6 in Propanol/Diacetonalkohol (1:1 v/v), die, bezogen auf den Gehalt an gelöstem Feststoff der Lösung, 10 Gew.-% eines Phenolharzes als Bindemittel und 5 Gew.-% 4-Octyl-4'-fluordiphenyldithiolennickel als Stabilisator enthielt, wurde analog Beispiel 30 auf eine gerillte Polycarbonatscheibe aufgeschleudert. Die erhaltene Speicherschicht war derjenigen aus Beispiel 30 in allen Belangen vergleichbar, wies aber eine erhöhte Stabilität gegenüber UV-Licht auf.

Beispiel 33

Eine 2 gew.-%ige Lösung des Farbstoffs 6 in Toluol, welche, bezogen auf den Gehalt an gelöstem Feststoff der Lösung, 10 Gew.-% Polymethylmethacrylat und 5 Gew.-% Biscampheratodithiolennickel enthielt, wurde analog Beispiel 30 auf eine Glasscheibe aufgeschleudert. Die erhaltene Farbstoffschicht war homogen und zeigte eine hohe Grundreflektivität. Sie konnte mit einem Halbleiterlaser (λ = 780 nm) gut beschrieben werden. Die eingeschriebenen Informationen sind unter den üblichen Testbedingungen stabil und können beliebig oft wieder ausgelesen werden.

## Patentansprüche

**1.** Unsymmetrische Azulenquadratsäurefarbstoffe der Formel I

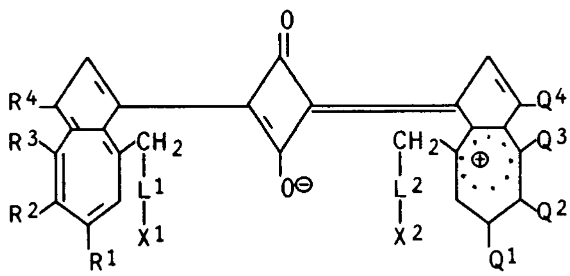

(I),

in der

| | |
|---|---|
| $X^1$ und $X^2$ | unabhängig voneinander jeweils Wasserstoff, Cyano oder einen Rest der Formel CO-$OR^5$, CO-$NR^5R^6$, $OR^5$, O-CO-$OR^5$, NH-CO-$R^5$, NH-CO-$OR^5$ oder NH-$SO_2$-$R^5$, worin $R^5$ und $R^6$ unabhängig voneinander jeweils für Wasserstoff, $C_1$-$C_{12}$-Alkyl, $C_2$-$C_{12}$-Alkenyl, $C_5$-$C_7$-Cycloalkyl oder gegebenenfalls substituiertes Phenyl stehen, |
| $L^1$ und $L^2$ | unabhängig voneinander jeweils eine chemische Bindung oder $C_1$-$C_{12}$-Alkylen, das gegebenenfalls durch Phenyl substituiert ist, und |
| $R^1$, $R^2$, $R^3$, $R^4$, $Q^1$, $Q^2$, $Q^3$ und $Q^4$ | unabhängig voneinander jeweils Wasserstoff oder $C_1$-$C_{12}$-Alkyl, das durch Halogen, $C_1$-$C_{12}$-Alkoxy, gegebenenfalls substituiertes Phenyl, $C_1$-$C_{12}$-Alkoxycarbonyl oder Cyano substituiert sein kann, |

bedeuten, mit der Maßgabe, daß

a) beide Azulenringe ein voneinander verschiedenes Substitutionsmuster aufweisen, und

b) wenn $R^4$ und/oder $Q^4$ Wasserstoff bedeuten, an den Azulenringen die Ringpositionen der Substituenten $CH_2$-$L^1$-$X^1$ und $R^3$ und/oder $CH_2$-$L^2$-$X^2$ und $Q^3$ auch gegeneinander vertauscht sein können.

2. Azulenquadratsäurefarbstoffe nach Anspruch 1, dadurch gekennzeichnet, daß $R^1$, $R^2$, $R^3$, $R^4$, $Q^1$, $Q^2$, $Q^3$ und $Q^4$ jeweils Wasserstoff oder $C_1$-$C_6$-Alkyl bedeuten.

3. Azulenquadratsäurefarbstoffe nach Anspruch 1, dadurch gekennzeichnet, daß
$R^1$, $R^3$, $Q^1$ und $Q^3$ jeweils Wasserstoff,
$R^2$ und $Q^2$ jeweils Isopropyl und
$R^4$ und $Q^4$ jeweils Methyl bedeuten.

4. Optisches Aufzeichnungsmedium, enthaltend einen Träger sowie einen strahlungsempfindlichen, Farbstoff und gegebenenfalls Bindemittel enthaltenden dünnen Beschichtungsfilm, dadurch gekennzeichnet, daß der Farbstoff die Formel I

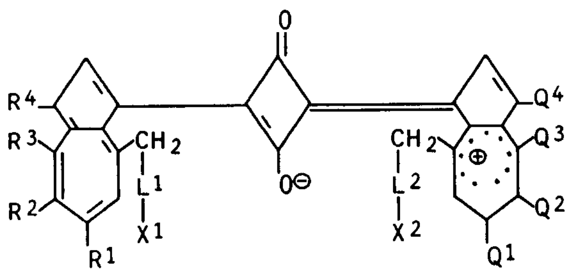

(I)

aufweist, in der

| | |
|---|---|
| $X^1$ und $X^2$ | unabhängig voneinander jeweils Wasserstoff, Cyano oder einen Rest der Formel CO-$OR^5$, CO-$NR^5R^6$, $OR^5$, O-CO-$OR^5$, NH-CO-$R^5$, NH-CO-$OR^5$ oder NH-$SO_2$-$R^5$, worin $R^5$ und $R^6$ unabhängig voneinander jeweils für Wasserstoff, $C_1$-$C_{12}$-Alkyl, $C_2$-$C_{12}$-Alkenyl, $C_5$-$C_7$-Cycloalkyl oder gegebenenfalls substituiertes Phenyl stehen, |
| $L^1$ und $L^2$ | unabhängig voneinander jeweils eine chemische Bindung oder $C_1$-$C_{12}$-Alkylen, das gegebenenfalls durch Phenyl substituiert ist, und |
| $R^1$, $R^2$, $R^3$, $R^4$, $Q^1$, $Q^2$, $Q^3$ und $Q^4$ | unabhängig voneinander jeweils Wasserstoff oder $C_1$-$C_{12}$-Alkyl, das durch Halogen, $C_1$-$C_{12}$-Alkoxy, gegebenenfalls substituiertes Phenyl, $C_1$-$C_{12}$-Alkoxycarbonyl oder Cyano substituiert sein kann, |

bedeuten, mit der Maßgabe, daß

a) beide Azulenringe ein voneinander verschiedenes Substitutionsmuster aufweisen, und

b) wenn $R^4$ und/oder $Q^4$ Wasserstoff bedeuten, an den Azulenringen die Ringpositionen der Substituenten $CH_2$-$L^1$-$X^1$ und $R^3$ und/oder $CH_2$-$L^2$-$X^2$ und $Q^3$ auch gegeneinander vertauscht sein können.

5. Optisches Aufzeichnungsmedium nach Anspruch 4, dadurch gekennzeichnet, daß $R^1$, $R^2$, $R^3$, $R^4$, $Q^1$, $Q^2$, $Q^3$ und $Q^4$ jeweils Wasserstoff oder $C_1$-$C_6$-Alkyl bedeuten.

6. Optisches Aufzeichnungsmedium gemäß Anspruch 4, dadurch gekennzeichnet, daß

$R^1$, $R^3$, $Q^1$ und $Q^3$ jeweils Wasserstoff,
$R^2$ und $Q^2$ jeweils Isopropyl und
$R^4$ und $Q^4$ jeweils Methyl bedeuten.

Europäisches Patentamt

# EUROPÄISCHER RECHERCHENBERICHT

Nummer der Anmeldung

EP 91 12 0865

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 310 080 (BASF)<br>* Seite 3, Zeile 16 - Seite 5, Zeile 12; Beispiele *<br>--- | 1-6 | C09B57/00<br>G11B7/24 |
| D,A | EP-A-0 341 541 (BASF)<br>* Zusammenfassung; Beispiele *<br>--- | 1-6 | |
| A | US-A-4 965 178 (T.SANTOH ET AL)<br>* Spalte 17, Zeile 31 - Spalte 29, Zeile 60 *<br>----- | 1-6 | |
| | | | RECHERCHIERTE SACHGEBIETE (Int. Cl.5) |
| | | | C09B<br>G11B |

Der vorliegende Recherchenbericht wurde für alle Patentansprüche erstellt

| Recherchenort | Abschlußdatum der Recherche | Prüfer |
|---|---|---|
| DEN HAAG | 14 APRIL 1992 | DAUKSCH H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument